Europäisches Patentamt

European Patent Office

Office européen des brevets

(11) Publication number: **0 180 389**
**B1**

## (12) EUROPEAN PATENT SPECIFICATION

(45) Date of publication of patent specification: **07.02.90**

(21) Application number: **85307563.8**

(22) Date of filing: **18.10.85**

(51) Int. Cl.⁵: **F 16 D 69/00**

(54) Friction components for clutch plates and the like.

(30) Priority: **26.10.84 AU 7853/84**

(43) Date of publication of application:
**07.05.86 Bulletin 86/19**

(45) Publication of the grant of the patent:
**07.02.90 Bulletin 90/06**

(84) Designated Contracting States:
**DE FR GB IT**

(56) References cited:
**EP-A-0 102 147**
**DE-C- 868 540**
**GB-A-1 185 175**
**US-A-2 812 842**

(73) Proprietor: **BRAKE AND CLUTCH INDUSTRIES
AUSTRALIA PTY. LTD.
264 East Boundary Road
East Bentleigh, VIC 3165 (AU)**

(72) Inventor: **Hadaway, Bernard M.
10 Highland Avenue
Highett Victoria, 3190 (AU)**

(74) Representative: **Perry, Robert Edward et al
GILL JENNINGS & EVERY 53-64 Chancery Lane
London WC2A 1HN (GB)**

Courier Press, Leamington Spa, England.

## Description

This invention is concerned with friction components as used in brakes and clutches. The invention has particular application to clutch plates such as those used in the drive transmission systems of motor vehicles, and it will be convenient to hereinafter describe the invention with particular reference to such vehicle clutch plates. It is to be understood however, that the invention is applicable to clutch plates intended for other uses, and is also applicable to brakes of various kinds.

A typical vehicle clutch plate includes a central inner section which carries a splined hub by which a drive connection is made with a vehicle tail shaft, and an annular outer section which is connected to and rotates with the inner section. The outer section has friction facing on each of two opposite sides and is clamped between a pressure plate and a flywheel, for example, when the clutch is engaged to transmit drive from the flywheel to the gear-box and tail shaft. It is usual to form each of the aforementioned sections of two plate-like parts which are connected together in face to face relationship. The splined hub and inner section are usually interconnected through torsional damping springs in a manner such that the hub and inner section are capable of limited rotation relative to one another.

The friction component for such a clutch plate is generally of annular form and is secured in place by means of separately formed rivets which are counter-sunk below the surface of the facing. It follows that the only usable part of the facing is that part which exists above the heads of the counter-sunk rivets.

One problem whith such prior constructions is that the usable part of the friction facing is limited by the intrusion of the rivets into the facing. Another problem is that setting of the several individual rivets is an inconvenient and time consuming task.

The invention will be hereinafter described with reference to a clutch plate of the general form described above in which each of the clutch plate sections is formed of two parts. Furthermore, the inner and outer sections may be secured together by means of rivets formed in accordance with the method described in co-pending European application no: EP—A—0 178 180 and the disclosure of the specification of that application is to be read into the present specification by cross-reference. Each part of the annular outer section of the clutch plate will be hereinafter called a friction component and the part of the inner section which carries the cushion segments will be called the main plate.

It is preferred that the plate-like section is made of sheet metal, but a non-metallic material such as a sufficiently strong plastics material could be satisfactory. When applied to clutch plates the friction component will usually be of annular form. In particular, the friction facing will be in the form of an annular section and there will be a plurality of metal sections embedded in the rear surface of that friction facing in circumferentially spaced relationship. Preferably, adjacent metal sections are interconnected through narrow integral bands of metal, each of which is located adjacent the inner periphery of the annulus. It is further preferred that each of those bands is substantially straight so as to extend generally in the direction of a tangent to that inner periphery rather than following the curvature of the inner periphery.

US—A—2812842 discloses a friction clutch plate with a friction component including a facing (31) of friction material, at least one metal section (26) of plate-like form secured to the facing so as to be held against movement relative thereto, and at least one hollow fastener (27, 29) formed integral with the metal section and projecting therefrom outwardly away from the rear surface of the facing, the fastener providing means whereby the friction component can be attached to a clutch plate cushioning spring (21, 22).

GB—A—1185175 discloses a metal section of plate-like form (1, 7, 11) with knurled edges of apertures (3, 8, 12) digging into the rear surface of a friction facing (2, 10, 13).

According to the present invention, in a friction component of the type described generically with reference to US—A—2812842, the metal section is embedded within, but exposed at and surrounded by the rear surface, of the friction facing.

The essential features of the invention, and further optional features, are described in details in the following passages of the specification which refer to the accompanying drawings. The drawings however, are merely illustrative of how the invention might be put into effect, so that the specific form and arrangement of the features (whether they be essential or optional features) is not to be understood as limiting on the invention.

In the drawings:

Figure 1 is an elevational view of a typical form of clutch plate to which an embodiment of the invention is applicable, in which parts have been removed for convenience of illustration;

Figure 2 is a view taken along line II—II of figure 1,

Figure 3 is a cross sectional view taken along line III—III of figure 1;

Figure 4 is an elevational view of an example friction component according to one embodiment of the invention;

Figure 5 is an enlarged cross sectional view taken along line V—V of figure 4;

Figure 6 is an enlarged cross sectional view taken along line VI—VI of figure 4;

Figure 7 is a diagrammatic view of one form of method for producing part of a friction component in accordance with the present invention;

Figure 8 is a view of the friction component part as manufactured in accordance with the method of figure 7;

Figure 9 is an enlarged cross sectional view taken along line IX—IX of figure 8;

Figure 10 is an enlarged cross sectional view taken along line X—X of figure 8;

Figure 11 is a partial view of another form of friction component made in accordance with the present invention;

Figure 12 is a view similar to figure 11 but showing yet another embodiment;

Figure 13 is a view similar to figure 11 but showing still another embodiment, and

Figure 14 is a view of yet another embodiment.

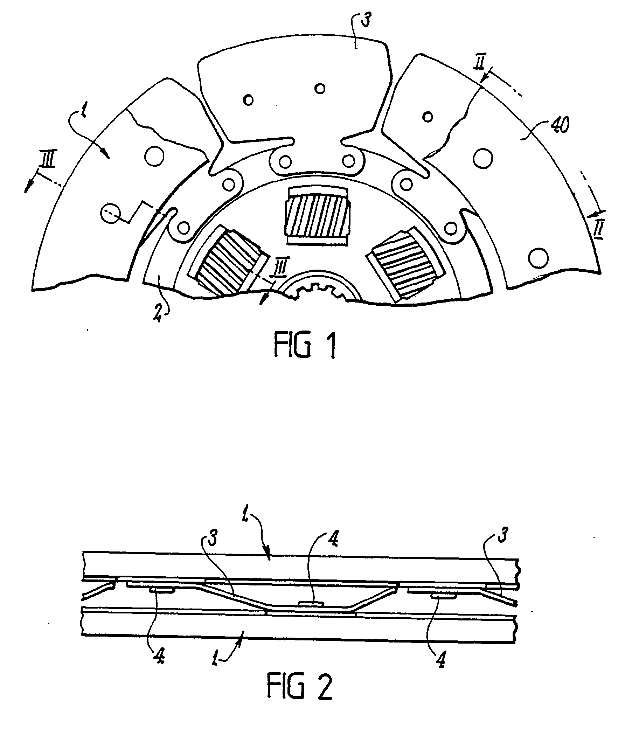

A typical clutch plate to which the invention is applicable is shown in part in figure 1, and in that construction each friction component 1 is connected to the main plate 2 through a plurality of separate cushion segments 3 which are plate-like and are formed of spring steel or the like. Each segment 3 is formed so as to function as a resilient spacer, whereby the two annular friction components 1 are supported in axially spaced relationship as shown in figure 2, but can be moved towards one another as a consequence of flexing of the segments 3. The cushion segments 3 are of known form and consequently need not be described in further detail.

In the particular arrangement shown, each cushion segment 3 is secured to each of the two friction components 1 by means of rivets 4 (figure 2). For that purpose, each friction component 1 may be provided with a series of integral rivets 4 and those rivets 4 may be formed in the manner described in co-pending application 85307297.3 or they may be formed in any other appropriate manner. Furthermore, the rivets 4 may be provided in a single row as shown in figure 1, or there may be two or more rows of such rivets 4.

Integral rivets 5, preferably of the foregoing kind, may be also formed on the main plate 2 of the clutch plate assembly and those rivets 5 can be arranged in spaced relationship around a pitch circle which is concentric with the clutch plate axis. As shown in figure 1, the rivets 55 are usually arranged in pairs, and the rivets 5 of each pair are spaced circumferentially around the same pitch circle. The rivets 5 of each pair are used to secure a respective cushion segment 3 to the main plate 2.

Any suitable method may be adopted to set the rivets 4 and 5 and thereby secure the various components in assembly.

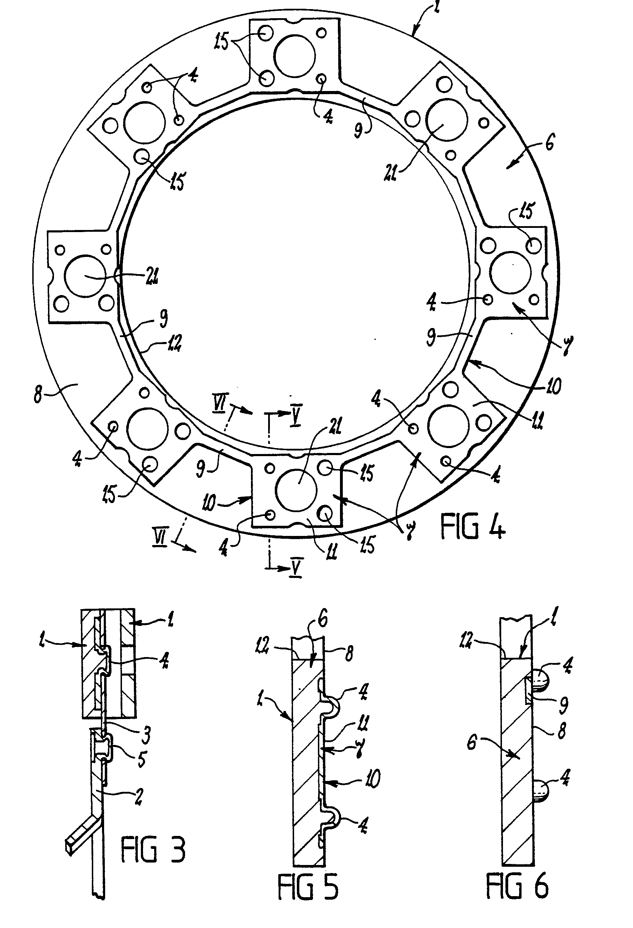

In the construction shown, each friction component 1 comprises an annular body 6 of friction facing and a plurality of plate-like sections 7 embedded into a rear surface 8 of that facing body 6. An example form of that type of construction is shown in figures 4 to 6 of the drawings. That and other examples shown by the accompanying drawings are related to clutch plate use, whereas in other applications of the invention the component need not be annular and a single metal section may be embedded in the facing body rather than having a plurality of such sections as shown.

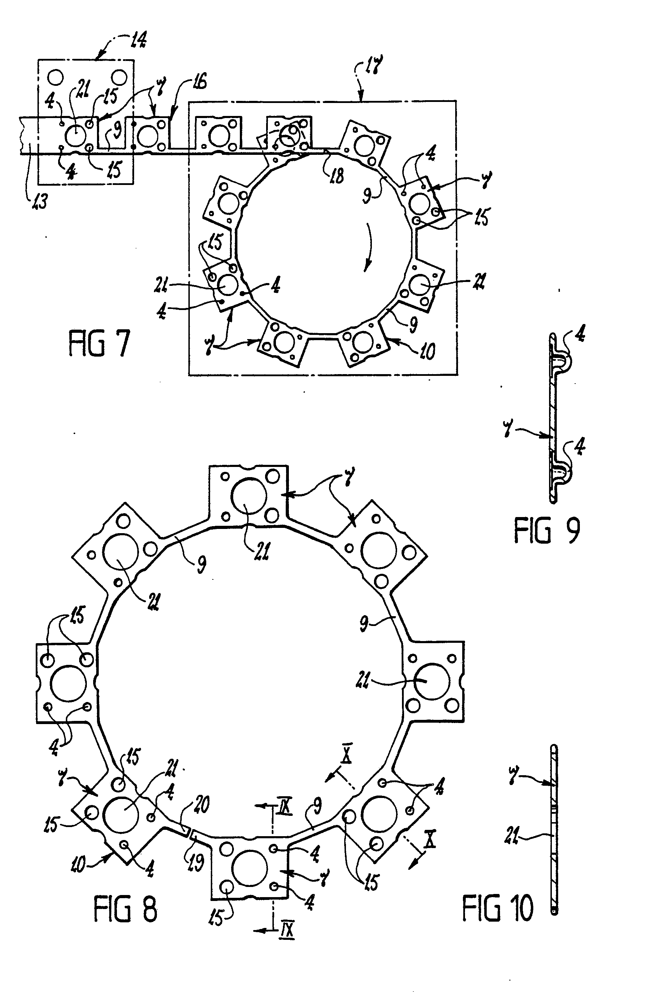

Each section 7 is preferably formed of sheet metal and is of such a size as to extend across a relatively small part of the surface 8. In that regard the function of each metal section 7 is to provide a carrier for at least one fastener 4, which in the example shown is in the form of a rivet, and in particular provides such a carrier which requires minimum intrusion of either it or the associated fastener 4 into the body 6 of the friction facing. In the example of figures 4 to 6 a plurality of integral rivets 4 is provided on each section 7, but in other situations there may be a single rivet only. Again in the particular example shown, adjacent sections 7 are interconneted by an integral narrow band 9 so that all sections 7 form part of a single unit, which will be hereinafter referred to as a skeleton 10. The skeleton 10 is embedded in the rear surfaces 8 of the facing body 6 as best shown in figures 5 and 6.

It is significant that the skeleton 10 is embedded within the rear surface 8 of the facing body 6 and in that regard it is preferred that the exposed face 11 of each section 7 is substantially ço-planar with the surface 8. That co-planar arrangement allows the cushion segments 3 to engage the rear surface 8 of the facing body 6 outside the perimeter of the section 7 and thereby increase the area of the facing body 6 which can be directly supported by the cushion segments 3 during use. Embedding the skeleton 10 has the further advantage of resisting separation of the skeleton 10 and the facing body 6 under torque loading.

The skeleton 10 can be secured to the facing body 6 in any appropriate fashion. For example, the body 6 may be moulded over the skeleton 10 so that bonding of the body 6 and skeleton 10 is achieved simultaneously with moulding. The skeleton 10 may be pretreated to improve the bond between it and the body 6, whether or not that bond is achieved simultaneous with moulding of the body 6. For example, the skeleton 10 may be subjected to a phosphating process, or it may be provided with an adhesive coating by spraying or other appropriate technique.

As shown in figure 4 the connecting bands 9 are arranged adjacent the inner periphery 12 of the facing body 6. It is preferred that each band 9 is substantially straight so as to extend generally in the direction of a tangent to the periphery 12.

A skeleton 10 of the general kind shown by figure 4 can be formed in any appropriate manner. For example, it may be pressed, stamped, or cut from sheet metal stock. Alternatively, it may be formed from a substantially straight strip of metal which is bent into a circular form as shown in figure 4. Figure 7 shows in diagrammatic form a method of the latter kind. In that method, a straight strip 13 of metal is fed into a press tool 14 which, in the example shown, serves to stamp or press sections from the strip 13 so as to form the sections 7 and interconnecting bands 9. For that purpose, passage through the press tool 14 will be on an intermittent basis. The tool 14 may also serve to form the integral rivets 4 and clearance holes 15 in each section 7.

The resulting formed strip 16 is then introduced into winding and shear mechanism 17 which serves to bend the formed strip 16 into the circular form previously mentioned. When that bending or winding operation has advanced to the stage shown in figure 7, the mechanism 17 operates to separate, by a cutting action for example, the resulting circular or annular skeleton 10 from the remainder of the strip 16. Such separation occurs along the line 18 as shown in figure 7.

Figures 8 to 10 show the skeleton 10 as it is formed by the mechanism 17. If desired, the opposed ends 19 and 20 of that skeleton 10 can be secured against separation by welding or other appropriate means.

In the particular arrangement shown by figures 7 to 10, the tool 14 removes a central portion of each section 7 so as to produce an opening 21 and that serves to reduce the material content and consequently the weight of the resulting skeleton 10.

Obviously, methods other than that described in connection with figure 7 may be adopted to form a skeleton 10 as shown in figures 8 to 10.

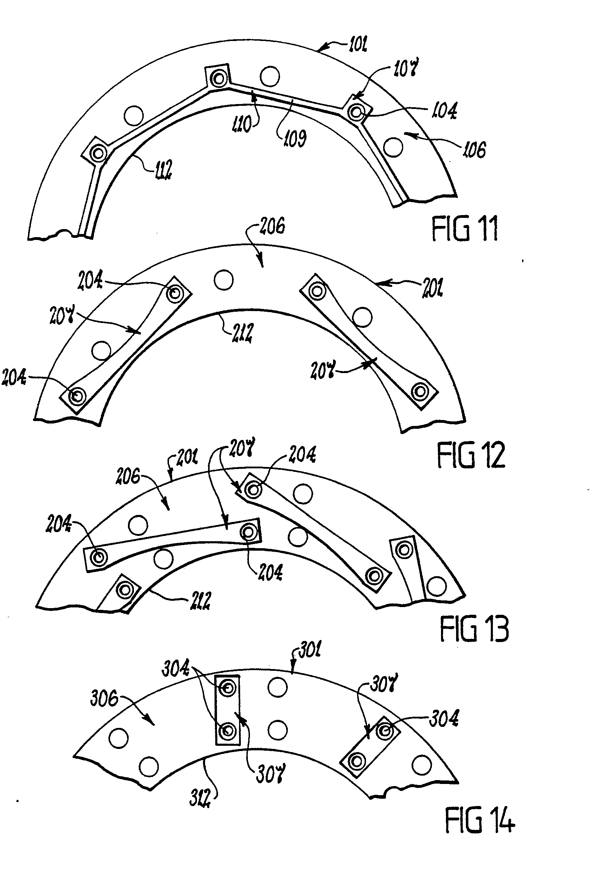

Furthermore, the skeleton may take many different forms and one alternative to the figure 4 arrangement is shown in figure 11. Components of the figure 11 construction which correspond to those of the figure 4 construction are given like reference numerals except that they form part of the number series 100 to 199. As with figure 4, the skeleton 110 is embedded in the facing body 106.

Figures 12 and 13 show arrangements in which the metal sections are formed as individual components rather than being interconnected as in the figure 4 and 11 arrangements. In each case components corresponding to those of figure 4 and given like reference numerals except that they form part of the number series 200 to 299. Figure 14 shows still another arrangement in which components are identified by numbers in the series 300 to 399. In each of the arrangements of figures 12 to 14 the metal sections 207 or 307 are embedded in the facing body 206 or 306 respectively as in the case of the figure 4 arrangement.

It will be apparent that many other variations are possible and that figures 11 to 14 merely illustrate a few of the available alternatives. Furthermore, as previously stated, the examples shown in the drawings relate to clutch plates and other forms of the invention may be more appropriate in other applications of the invention such as friction components for brakes.

A friction component in accordance with the present invention has several important advantages over the prior art. One advantage is that the friction facing can be made thinner than in the case of prior constructions while having the same depth of usable material. Such a reduction in thickness reduces the cost of the component and also reduces its inertia. When the invention is applied to clutch plates, the latter aspect can reduce wear in associated transmission components. Furthermore, the use of integral rivets adds to the convenience of connecting the friction component into an assembly. It is also possible to accurately locate the or each metal section relative to the friction facing, particularly when that facing is moulded directly over the metal section while that section is located in the moulding die. That improves the balance of the component with consequent improvement in overall performance.

Other advantages will be apparent from the foregoing detailed description.

## Claims

1. A friction component including a facing (6) of friction material, at least one metal section (7) of plate-like form secured to the facing so as to be held against movement relative thereto, and at least one hollow fastener (4) formed integrally with the metal section and projecting therefrom outwardly away from a rear surface (8) of the facing, the fastener providing means whereby the friction component can be attached to a clutch plate cushioning spring, characterised in that the metal section is embedded within the rear surface, so as to be exposed at that rear surface, and so that the periphery of the metal section is completely surrounded by the friction facing.

2. A friction component according to claim 1, wherein the facing is as formed by moulding and the or each plate-like section is secured to the facing as by being bonded thereto simultaneously with the moulding step.

3. A friction component according to claim 1 or claim 2, wherein the or each metal section has been phosphated before being embedded in and secured to the facing.

4. A friction component according to any preceding claim, wherein the or each plate-like section is secured to the facing by adhesive.

5. A friction component according to any preceding claim, wherein the exposed face (11) of the or each metal section is substantially coplanar with the said rear surface.

6. A friction component according to any preceding claim, which comprises, in spaced relationship on the facing, a plurality of the plate-like sections.

7. A friction component according to claim 6, wherein adjacent plate-like sections are interconnected.

8. A friction component according to claim 7, wherein the interconnection comprises an integral relatively narrow metal band (9).

9. A friction component according to claim 8, wherein the interconnected plate-like sections are in the form of a substantially annular skeleton (10) in which the bands form part of the inner periphery, the plate-like sections projecting laterally outwards.

10. A friction component according to claim 9, wherein each band of the skeleton is substantially straight.

11. A friction component according to any preceding claim, wherein the or each plate-like section extends across a small part of the area of the said rear surface.

12. A friction component according to any preceding claim, wherein the facing is an annular section of friction material.

13. A friction component according to claim 9 or claim 10, additionally having the characteristics of each of claims 11 and 12.

14. A clutch plate assembly which includes a friction component according to claim 12 or claim 13.

**Patentansprüche**

1. Reibungsbauteil, mit einem Belag (6) aus Reibungsmaterial, mit mindestens einem plattenförmigen Metallabschnitt, der an dem Belag befestigt ist, so daß er gegen eine Bewegung relativ zu diesem festgehalten wird, und mindestens einem hohlen Halter (4), der einstückig mit dem Metallabschnitt (7) ausgebildet ist und von diesem nach außen weg von einer hinteren Oberfläche (8) des Belags vorragt, wobei der Halter Mittel schafft, durch welche das Reibungsbauteil an einer Kupplungsplatten-Pufferfeder befestigt werden kann, dadurch gekennzeichnet, daß der Metallabschnitt innerhalb der hinteren Oberfläche derart eingebettet ist, daß er an dieser hinteren Oberfläche freiliegt, und so, daß der Umfang des Metallabschnitts vollständig von dem Reibungsbelag umgeben ist.

2. Reibungsbauteil nach Anspruch 1, dadurch gekennzeichnet, daß der Belag durch ein Gußverfahren hergestellt ist und der oder jeder plattenförmige Abschnitt an dem Belag dadurch befestigt ist, daß er gleichzeitig mit dem Verfahrensschritt des Gießens an diesen geklebt wird.

3. Reibungsbauteil nach Anspruch 1 oder 2, dadurch gekennzeichnet, daß der oder jeder Metallabschnitt phosphatiert wird, bevor er in den Belag eingebettet und an diesem befestigt wird.

4. Reibungsbauteil nach einem der vorhergehenden Ansprüche, dadurch gekennzeichnet, daß der oder jeder plattenförmige Abschnitt an dem Belag durch Klebstoff befestigt ist.

5. Reibungsbauteil nach einem der vorhergehenden Ansprüche, dadurch gekennzeichnet, daß die freiliegende Fläche (11) des oder jedes Metallabschnitts im wesentlichen coplanar mit der hinteren Oberfläche ist.

6. Reibungsbauteil nach einem der vorhergehenden Ansprüche, dadurch gekennzeichnet, daß es eine Mehrzahl von voneinander auf dem Belag beabstandeten, plattenförmigen Abschnitten aufweist.

7. Reibungsbauteil nach Anspruch 6, dadurch gekennzeichnet, daß aneinander angrenzende plattenförmige Abschnitte miteinander verbunden sind.

8. Reibungsbauteil nach Anspruch 7, dadurch gekennzeichnet, daß die Verbindung ein einstückiges, relativ schmales Metallband (9) aufweist.

9. Reibungsbauteil nach Anspruch 8, dadurch gekennzeichnet, daß die miteinander verbundenen plattenförmigen Abschnitte in Form eines im wesentlichen ringförmigen Rahmens (10) sind, bei welchem die Bänder einen Teil des inneren Umfangs bilden und die plattenförmigen Abschnitte von diesen seitlich nach außen vorragen.

10. Reibungsbauteil nach Anspruch 9, dadurch gekennzeichnet, daß jedes Band des Rahmens im wesentlichen gerade ist.

11. Reibungsbauteil nach einem der vorhergehenden Ansprüche, dadurch gekennzeichnet, daß der oder jeder plattenförmige Abschnitt sich über einen schmalen Teil der Fläche der hinteren Oberfläche erstreckt.

12. Reibungsbauteil nach einem der vorhergehenden Ansprüche, dadurch gekennzeichnet, daß der Belag ein ringförmiger Abschnitt aus Reibungsmaterial ist.

13. Reibungsbauteil nach Anspruch 9 oder 10, gekennzeichnet zusätzlich durch die Merkmale jeder der Ansprüche 11 und 12.

14. Kupplungsplattenanordnung, die ein Reibungsbauteil nach einem der Ansprüche 12 oder 13 enthält.

**Revendications**

1. Elément de friction qui comprend une garniture (6) en matériau de friction, au moins un élément métllique (7), en forme de plaquette, fixé sur cette garniture de façon à être immobilisé par rapport à cette garniture et au moins un élément de fixation creux (4) venu de matière avec cet élément métallique et faisant saillie à partir de lui vers l'extérieur, en s'éloignant de la surface arrière (8) de la garniture, cet élément de fixation constituant des moyens à l'aide desquels l'élément de friction peut être fixé sur un ressort d'amortissement de disque d'embrayage, caractérisé en ce que l'élément métallique est noyé dans la surface arrière, de façon à être apparente au niveau de cette surface arrière et de façon que le contour périphérique de cet élément métallique soit complètement entouré par la garniture de friction.

2. Elément de friction suivant la revendication 1, dans lequel la garniture est réalisée par moulage et l'élément ou chaque élément en forme de plaquette est fixé sur cette garniture, par exemple en en étant rendu solidaire lors de l'opération de moulage.

3. Elément de frictionsuivant la revendication 1 ou la revendication 2, dans lequel l'élément ou chaque élément métallique a été phosphaté avant d'être noyé dans la garniture et rendu solidaire de celle-ci.

4. Elément de friction suivant l'une quelconque des revendications précédentes, dans lequel l'élément ou chaque élément en forme de plaquette est rendu solidaire de la garniture à l'aide d'une substance adhésive.

5. Elément de friction suivant l'une quelconque des revendications précédentes, dans lequel la face apparente (11) de l'élément ou de chaque élément métallique est sensiblement coplanaire avec ladite surface arrière.

6. Elément de friction suivant l'une quelconque des revendications précédentes, qui comprend, disposés de manière espacée sur la garniture, plusieurs éléments en forme de plaquette.

7. Elément de friction suivant la revendication 6, dans lequel des éléments en forme de plaquette adjacents sont reliés mutuellement.

8. Elément de friction suivant la revendication 7, dans lequel la jonction mutuelle est constituée par une bande métallique relativement étroite venue de matière (9).

9. Elément de friction suivant la revendication 8, dans lequel les éléments en forme de plaquette reliés mutuellement se présentent sous la forme d'une ossature sensiblement annulaire (10) dans laquelle les bandes font partie du contour périphérique intérieur, les éléments en forme de plaquette faisant saillie latéralement vers l'extérieur.

10. Elément de friction suivant la revendication 9, dans lequel chaque bande de l'ossature est sensiblement rectiligne.

11. Elément de friction suivant l'une quelconque des revendications précédentes, dans lequel l'élément ou chaque élément en forme de plaquette s'étend sur une petite partie de la zone de ladite surface arrière.

12. Elément de friction suivant l'une quelconque des revendications précédentes, dans lequel la garniture est un élément annualaire en matériau de friction.

13. Elément de friction suivant la revendication 9 ou la revendication 10, comportant en outre les particularités de chacune des revendications 11 et 12.

14. Disque d'embrayage comportant un élément de friction suivant la revendication 12 ou la revendication 13.

FIG 1

FIG 2

FIG 4

FIG 3

FIG 5

FIG 6

EP 0 180 389 B1

FIG 7

FIG 8

FIG 9

FIG 10

3

FIG 11

FIG 12

FIG 13

FIG 14